(19) **Europäisches Patentamt**

**European Patent Office**

**Office européen des brevets**

(11) **EP 1 276 603 B1**

(12) **FASCICULE DE BREVET EUROPEEN**

(45) Date de publication et mention
de la délivrance du brevet:
**10.05.2006 Bulletin 2006/19**

(51) Int Cl.:
**B29C 70/50** *(2006.01)* **B29B 15/10** *(2006.01)*
**B29C 47/02** *(2006.01)*

(21) Numéro de dépôt: **01929695.3**

(22) Date de dépôt: **25.04.2001**

(86) Numéro de dépôt international:
**PCT/FR2001/001259**

(87) Numéro de publication internationale:
**WO 2001/081073 (01.11.2001 Gazette 2001/44)**

(54) **PROCEDE ET DISPOSITIF DE FABRICATION D'UN PROFILE COMPOSITE FORME DE MATIERE ORGANIQUE THERMOPLASTIQUE RENFORCEE PAR DES FIBRES DE RENFORCEMENT**

VERFAHREN UND VORRICHTUNG ZUR HERSTELLUNG EINES VERBUNDPROFILS AUS ORGANISCHEM, THERMOPLASTISCHEM, DURCH VERSTÄRKUNGSFASERN VERSTÄRKTEM KUNSTSTOFF

METHOD AND APPARATUS FOR MAKING A COMPOSITE EXTRUDED PROFILE FORMED WITH THERMOPLASTIC ORGANIC MATERIAL REINFORCED WITH REINFORCING FIBRES

(84) Etats contractants désignés:
**AT BE CH CY DE DK ES FI FR GB GR IE IT LI LU MC NL PT SE TR**

(30) Priorité: **25.04.2000 FR 0005260**

(43) Date de publication de la demande:
**22.01.2003 Bulletin 2003/04**

(73) Titulaire: **Saint-Gobain Vetrotex France S.A.
73000 Chambéry (FR)**

(72) Inventeurs:
• **BOISSONNAT, Philippe
F-73190 Challes les Eaux (FR)**
• **COOPER, Edward
St Catharines, Ontario (CA)**
• **ZANELLA, Guy
F-73160 Cognin (FR)**

• **CAREL, Rémi
F-69005 Lyon (FR)**
• **MACQUART, Philippe
F-92600 Asnières (FR)**
• **GAY, Thierry
F-71250 Cluny (FR)**

(74) Mandataire: **Muller, René
SAINT-GOBAIN RECHERCHE
39, quai Lucien Lefranc
93303 Aubervilliers (FR)**

(56) Documents cités:
**EP-A- 0 602 618 DE-A- 4 421 184**

• **PATENT ABSTRACTS OF JAPAN vol. 016, no. 283 (C-0955), 24 juin 1992 (1992-06-24) & JP 04 073235 A (TOYOBO CO LTD), 9 mars 1992 (1992-03-09)**

## Description

L'invention concerne la fabrication d'un profilé composite à base de matière organique thermoplastique renforcé par des fibres de renforcement.

Dans un souci d'allégement de toute une variété de produits, il est courant de fabriquer des articles en matière plastique au lieu de matériaux plus denses, la matière plastique étant renforcée intrinsèquement notamment par des renforts fibreux pour maintenir la résistance mécanique du produit.

Il est connu d'utiliser des renforts comprenant des fibres courtes mélangées directement à la matière plastique, ou introduites sous forme de matériaux composites tels que des granules comprenant les renforts dans une matrice de résine ou de matière plastique. Ces fibres courtes ne permettent toutefois pas de réaliser tous les types de renforts souhaités, notamment pour renforcer la résistance à la flexion d'articles dans une direction d'une certaine étendue.

Il existe des renforts à base de fibres continues sous forme de voiles ou de tissus plus spécialement adaptés à la technique de fabrication d'articles par moulage.

L'incorporation de fibres continues de renforcement dans un article profilé, caractérisé par une grande longueur comparativement à ses deux autres dimensions, continue toutefois de soulever quelque difficulté. La technique de moulage se révèle en effet coûteuse, et il apparaît souhaitable de développer d'autres solutions de fabrication.

On connaît d'après la demande de brevet FR 2 516 441 un procédé de fabrication de profilés minces comprenant des fibres de verre continues unidirectionnelles noyées dans une résine thermoplastique.

Les étapes du procédé pour obtenir de tels profilés sont les suivantes :

- déroulage des fils de verre depuis des bobines pour former une nappe de fils ;
- séparation des fibres des fils pour les décoller les unes des autres en raison de l'ensimage les revêtant ;
- trempage de la nappe de fibres de verre dans un bain aqueux de matière thermoplastique ou bien dans un lit fluidisé de poudre de matière thermoplastique ;
- chauffage de la nappe pour obtenir selon le mode de trempage, l'évaporation de l'eau ou bien la fusion de la poudre ;
- conformation à chaud de la nappe de fibres enrobée de résine de manière à réaliser le profil désiré.

Un inconvénient dans ce procédé est de devoir introduire, pour une imprégnation homogène des fibres par la matière thermoplastique, l'étape de séparation des fibres. Celle-ci nécessite un dispositif spécifique utilisant plusieurs rouleaux, dont le nombre et la disposition pour assurer l'angle d'enroulement adéquat de la nappe sur ceux-ci sont déterminés par le degré de collage des fibres entre elles.

De plus, il est parfois nécessaire lorsque le degré de collage est trop important de prévoir des moyens de chauffage complémentaires aux rouleaux.

Par conséquent, l'éventualité de ne pas séparer parfaitement toutes les fibres pour permettre ensuite un enrobage de celles-ci par de la matière thermoplastique existe.

Par ailleurs, le procédé utilise pour l'imprégnation un bain de matière thermoplastique qui doit être maintenu à un niveau constant et dont la dispersion est en circulation constante pour assurer une imprégnation aussi constante que possible. Or les moyens de mise en oeuvre de ce bain sont importants et lourds à gérer sur une chaîne de fabrication; il s'agit d'éléments tels qu'une pompe d'envoi de liquide, un déversoir pour l'établissement d'un niveau constant, un bac de stockage pour le trop plein, un dispositif d'agitation pour l'homogénéité du contenu du bain, ces éléments impliquant un nettoyage régulier.

Dans la variante du dispositif d'imprégnation pour l'emploi d'un lit fluidisé, des moyens spécifiques sont aussi nécessaires, notamment un système vibrant monté sur ressorts pour doser la quantité de poudre emportée par les fibres.

Enfin, le dispositif de conformation est constitué d'un rouleau inférieur pourvu d'une gorge dans laquelle défile la nappe et d'un rouleau supérieur servant à presser la nappe. Ainsi les divers calibres attendus du profilé impliquent l'inconvénient d'avoir à disposition plusieurs rouleaux portant respectivement des gorges de différentes dimensions.

Par conséquent, ce procédé, lent de mise en oeuvre, s'avère coûteux et peu performant.

Ce procédé est en outre limité à la réalisation de profilés minces et offre peu de liberté quant au dessin de la section du profilé, notamment si l'on souhaite ajuster la quantité de matière plastique dans certaines portions de la section profilée.

Le document DE-A- 4421184 décrit un procédé de fabrication d'un profilé composite à base de matière organique thermoplastique renforcée par des fibres de renforcement comprenant les étapes consistant à mettre une multiplicité de fils continus de renforcement en présence d'un matière organique thermoplastique et à conformer la matière composite, ledit procédé comprend les étapes suivantes:

a) on rassemble de manière parallèle des fils continus à base de fibres de verre continues et d'une première matière thermoplastique et l'on forme en chauffant au moins un ruban consolidé dans lequel les fibres de renforcement sont imprégnées de la première matière thermoplastique, et

b) on introduit au moins un ruban dans une filière calibrée à la section du profilé et l'on introduit simultanément au moins une deuxième matière organique thermoplastique fondue dans ladite filière au contact du ou des rubans, de manière à obtenir un profilé constitué d'au moins une deuxième matière organique thermoplastique renforcée par au moins un ruban.

La présente invention a donc pour but de fournir un procédé de fabrication d'un profilé composite à base de matière organique thermoplastique renforcée par des fibres de renforcement comme revendiqué dans la revendication 1, qui soit de mise en oeuvre aisée et rapide, ainsi qu'économique sur un plan industriel.

Plus particulièrement, l'invention propose grâce à ce procédé produit se présentant sous la forme d'un profilé constitué d'une part d'au moins un ruban de fils continus de renforcement agencés de manière sensiblement parallèle et contiguë les uns contre les autres et solidarisés entre eux par une première matière thermoplastique et d'autre part d'au moins une deuxième matière plastique en contact intime avec ledit (lesdits) ruban (s).

Selon l'invention, le procédé de fabrication du ruban est caractérisé en ce qu'il comprend au moins les étapes suivantes :

- on rassemble de manière parallèle des fils continus à base de fibres de verre continues et d'une première matière thermoplastique ces fils étant co-mêlés entre-eux,
- on impose une mise en tension des fils continus par un dispositif de mise en tension,
- on forme en chauffant au moins un ruban consolidé dans lequel les fibres de renforcement sont imprégnées de la première matière thermoplastique, et
- on introduit au moins un ruban dans une filière calibrée à la section du profilé et l'on introduit simultanément au moins une deuxième matière organique thermoplastique fondue dans ladite filière au contact du ou des rubans, de manière à obtenir un profilé constitué d'au moins une deuxième matière organique thermoplastique renforcée par au moins un ruban.

Comme on le détaillera aussi par la suite, on entend par ruban au sens de la présente description un matériau en bande, qui peut être essentiellement plate, ou affecter une forme de section plus complexe où chaque portion est assimilable à une bande.

Le ruban peut être souple, notamment susceptible d'être enroulé lorsque le ruban est sensiblement plat, ou plus ou moins rigide.

On entend d'autre part par consolidé, le fait que les fibres de verre sont imprégnées par la première matière thermoplastique de sorte que le ruban présente une certaine cohésion et une intégrité qui permettent de le manipuler sans endommagement.

Selon l'invention, la fabrication préliminaire d'un renfort consolidé garantit l'intégration du renfort sous la forme souhaitée et avec la géométrie souhaitée dans le profilé, et l'imprégnation par la première matière thermoplastique garantit d'autre part une véritable liaison du renfort à la ou aux deuxièmes matières thermoplastiques qui constitue(nt) le corps du profilé.

On forme le ruban à partir de fils continus comprenant des fils de verre et des fibres organiques de ladite première matière thermoplastique;

les fils qu'on rassemble consistent en des filaments continus de verre et de matière thermoplastique co-mêlés entre eux. La structure intime de ces fils facilite l'imprégnation des fibres de verre par la matière thermoplastique, en particulier elle améliore l'homogénéité de l'imprégnation pour former un ruban consolidé lui-même très homogène.

Ladite première matière thermoplastique peut être choisie parmi des polyoléfines, notamment le polyéthylène, le polypropylène, et des polyesters, notamment le polytéréphtalate d'éthylène, le polytéréphtalate de butylène. Suivant une réalisation particulière, pour la formation du ruban :

- on entraîne et on rassemble de manière parallèle des fils à base de la première matière thermoplastique et de fibres de verre, sous la forme d'au moins une nappe ;
- on fait pénétrer au moins une nappe dans une zone où elle est chauffée à une température atteignant au moins celle de fusion de la première matière thermoplastique sans atteindre la température de ramollissement des fibres de renforcement ;
- on fait passer au moins une nappe dans un dispositif d'imprégnation, tout en maintenant sa température à une température de malléabilité de la première matière thermoplastique, pour répartir de manière homogène la première matière thermoplastique fondue et imprégner les fibres de verre par celle-ci .

Selon une autre caractéristique, on introduit au moins une nappe dans un premier dispositif de conformation, tout en maintenant sa température à une température de malléabilité de la première matière thermoplastique, de manière à obtenir au moins un ruban constitué par le rapprochement en contigu des fils formant une continuité transversale.

Selon une autre caractéristique, le procédé comprend une étape consistant à dévider des bobines d'un fil continu de filaments de verre et de matière thermoplastique, et lors du rassemblement des fils sous forme de nappe, à réguler la tension des fils.

Avantageusement, les fils sont débarrassés de toute électricité statique avant le passage de la nappe dans la zone de chauffage.

Suivant des réalisations particulières, on forme dans la première étape un ruban essentiellement plat ou au contraire conformé à un profil particulier.

Selon une caractéristique, le ruban est déformé lors de son introduction dans la filière qui joue alors le rôle d'un second dispositif de conformation.

Selon une autre caractéristique, on introduit dans la filière au moins une deuxième matière thermoplastique qui a été conditionnée par un dispositif d'extrusion. Une telle matière thermoplastique peut être notamment une polyoléfine ou du polychlorure de vinyle.

Selon une autre caractéristique, on refroidit le profilé pour fixer ses caractéristiques dimensionnelles et son aspect, et délivrer le profilé fini.

Selon une autre caractéristique, le profilé est découpé en fin de ligne de fabrication pour son stockage.

L'invention comprend aussi un dispositif de mise en oeuvre du procédé conformément à la revendication 11.

Suivant une réalisation, le dispositif comprend :

- des moyens pour entraîner et des moyens pour rassembler sous forme d'au moins une nappe les fils continus constitués de filaments continus de verre et d'une première matière thermoplastique ;
- des moyens pour chauffer au moins une nappe à une température atteignant au moins celle de fusion de la première matière thermoplastique mais pas celle de ramollissement des filaments de verre ;
- un dispositif d'imprégnation d'au moins une nappe chauffée de manière à répartir de manière homogène la première matière thermoplastique fondue et permettre l'imprégnation des filaments de verre par celle-ci.

Selon une caractéristique, le dispositif comprend des moyens de chauffage constitués par des fours.

Selon une autre caractéristique, les moyens de rassemblement du dispositif consistent en un peigne dont les dents permettent un alignement parallèle des fils selon des espaces réguliers.

Selon une variante avantageuse, un dispositif anti-statique est prévu en amont des moyens de chauffage.

Selon une autre caractéristique, le dispositif d'imprégnation comporte trois organes qui sont disposés en triangle et entre lesquels défile la nappe, la hauteur de séparation des organes étant adaptée pour établir une pression appropriée sur la surface de la nappe. Les organes peuvent être des cylindres chauffants et tournants, ou des barreaux chauffants et fixes.

Avantageusement, chaque cylindre comporte une lame pour racler la matière thermoplastique fondue déposée sur le cylindre après passage de la nappe.

Selon une autre caractéristique, le dispositif comprend un premier dispositif de conformation d'au moins une nappe de manière à la transformer en au moins un ruban. Selon une autre caractéristique, le dispositif de conformation comprend une filière, avantageusement chauffante, et/ou des galets entre lesquels circule la nappe de fils.

Un dispositif de conformation particulier assure également le centrage de la nappe et comporte un galet inférieur et un galet supérieur décalés l'un au-dessus de l'autre et tournant en sens opposés, le galet supérieur étant de forme hyperboloïde, la nappe étant concentrée autour de l'axe central de défilement lors de son passage entre les deux galets pour délivrer un ruban présentant une association contiguë des fils les uns contre les autres.

Selon encore une autre caractéristique, le dispositif selon l'invention comprend en amont de la filière par laquelle on forme la ou les deuxièmes matières thermoplastiques ou cette filière elle-même comprend des moyens de positionnement et/ou de conformation d'au moins un ruban pour la mise en contact avec au moins une deuxième matière thermoplastique.

Suivant une réalisation, la filière comprend des moyens pour apporter la deuxième matière thermoplastique fondue au contact du ruban en y appliquant une surpression.

Selon une autre caractéristique, une extrudeuse apporte au moins une deuxième matière thermoplastique fondue dans ladite filière.

Selon encore une autre caractéristique, le dispositif comprend un dispositif de refroidissement du profilé, notamment par exposition à l'air ou à un fluide de refroidissement, et/ou par contact avec des organes aux surfaces froides ou refroidies, permettant de figer la ou les deuxième(s) matière(s) thermoplastique(s) eUou la première matière thermoplastique et de solidariser les fils entre eux et former le profilé définitif.

En particulier, le dispositif peut comprendre une calandre de refroidissement, constituée notamment de deux cylindres tournants de refroidissement qui sont disposés l'un au-dessus de l'autre et sont dépourvus de bords de guidage, la calandre conférant ainsi sa forme définitive au profilé.

Avantageusement, le dispositif peut comprendre une filière froide ou refroidie, généralement de même profil et de même dimension que la première filière recevant le ruban et la ou les deuxièmes matières thermoplastiques.

Selon une caractéristique avantageuse, le dispositif peut comprendre des moyens de projection de liquide qui permettent de refroidir le profilé en défilement.

D'autres avantages et caractéristiques vont à présent être décrits en regard des dessins sur lesquels :

- la figure 1 est une vue schématique en élévation du dispositif de fabrication d'un ruban selon l'invention ;
- les figures 2 à 6 sont des vues de profil de certaines parties du dispositif de la figure 1, respectivement, d'un dispositif de régulation de tension des fils, du dispositif tournant d'imprégnation, de deux variantes du premier dispositif de conformation et du second dispositif de conformation ;
- la figure 7 représente l'évolution des propriétés mécaniques en fonction de la température d'un profilé obtenu selon l'invention.

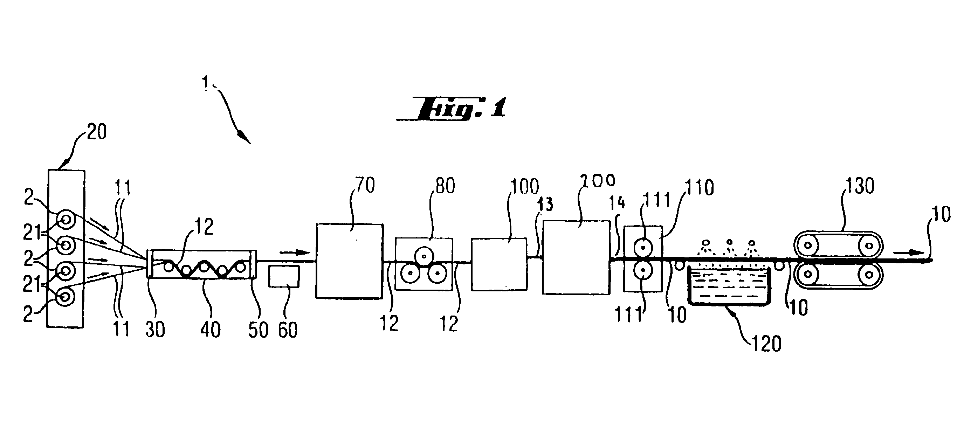

Le dispositif 1 visible à la figure 1 permet la fabrication d'un profilé 10 conforme à l'invention qui est constitué d'une part d'au moins un ruban de fils continus de renforcement agencés de manière parallèle et contiguë les uns contre les autres et solidarisés entre eux par une première matière thermoplastique et d'autre part d'au moins une seconde matière plastique en contact intime avec ledit (lesdits) ruban(s).

Chaque fil, commercialisé par la société VETROTEX sous la dénomination commerciale *TWINTEX®* et fabriqué selon le procédé décrit dans le brevet EP 0 599 695, est constitué par des filaments de verre et des filaments d'une matière organique thermoplastique, de type polyoléfine ou polyester, intimement mêlés entre eux.

Le dispositif de fabrication 1 comprend, sous forme d'une ligne et d'amont en aval, un cantre 20 muni de plusieurs bobines 2 constituées d'enroulement de fil 11, une plaque à oeillets 30, un dispositif de régulation de tension des fils 40, un peigne 50, un dispositif anti-électricité statique 60, un four 70, un dispositif d'imprégnation 80, un premier dispositif de conformation 100, notamment une filière, un second dispositif de conformation, notamment une filière 200, une extrudeuse 300, une calandre 110, un bac de refroidissement 120 et un banc de tirage à chenilles 130.

Le cantre 20 a pour but de dévider le fil 11 de chaque bobine 2. Il peut être du type à déroulement et se composer d'un châssis muni d'axes rotatifs horizontaux 21 qui supportent chacun une bobine 2.

En variante, on peut utiliser un cantre à dévidage, mais celui-ci induit une torsion sur le fil qui n'est pas constante allant de un tour pour 50 cm jusqu'à un tour pour 1 m, qui a pour effet de limiter l'épaisseur minimale du ruban fini, notamment en ne pouvant descendre en-dessous de 0,3 mm pour des bobines de fil de 982 tex. En outre, cette torsion peut favoriser l'emmêlement des fils en cours de défilement sur la chaîne de fabrication du ruban ce qui provoquerait des noeuds et/ou des fils 11 non parallèles et non tendus dans le ruban une fois formé.

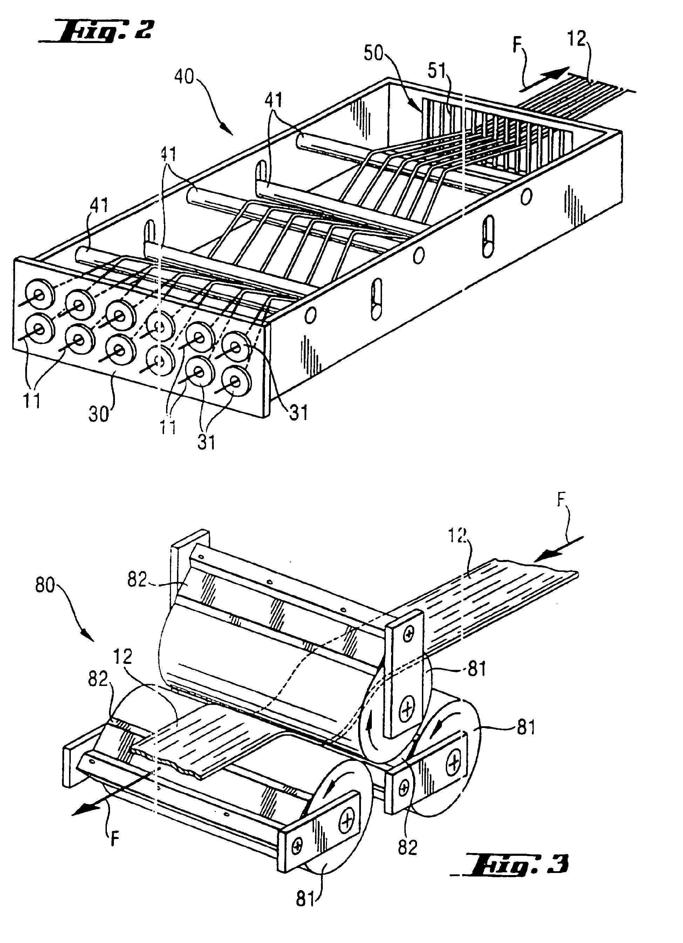

On peut par conséquent préférer l'utilisation d'un cantre à déroulement, en particulier pour réaliser une fine épaisseur de ruban (inférieure à 0,2 mm). Il s'avère cependant nécessaire dans ce cas de prévoir un dispositif de régulation, référencé 40 sur les figures 1 et 2, qui permet d'ajuster le niveau de tension global de la nappe de fils.

La plaque à oeillets 30, visible aussi à la figure 2, est située dans un plan vertical et parallèle aux axes rotatifs 21 du cantre. Elle permet de regrouper les fils 11, qui traversent chacun un oeillet 31 pour être guidés vers le dispositif de régulation de tension 40 sous un angle adapté à la tension désirée. Les oeillets 31 sont de manière connue en matériau céramique pour éviter d'endommager les fils lors de leur passage au travers de ceux-ci.

Le dispositif de régulation de tension 40 qui est illustré à la figure 2 est associé à la plaque à oeillets 30. Il comporte une série de barreaux cylindriques 41 disposés en quinconce les uns aux dessus des autres et, sur et sous lesquels cheminent les fils 11 en provenance de la plaque à oeillets 30 de manière à dessiner des sinusoïdes identiques dont l'amplitude influe sur la tension des fils. Les barreaux sont réglables en hauteur afin de pouvoir modifier l'amplitude des sinusoïdes qui, par son augmentation, impose une tension supplémentaire aux fils.

Les barreaux sont avantageusement en laiton ou en matériau céramique pour limiter les phénomènes d'électricité statique induits par le frottement des fils. A la sortie du dispositif 40 est disposé un peigne 50 dont les dents 51 regroupent et alignent parallèlement les fils 11 selon un espace régulier pour obtenir une nappe 12 à la manière de faisceaux de fils.

Entre le peigne 50 et l'entrée du premier four 70 est implanté un dispositif électrique 60 servant à annihiler toute électricité statique dont pourraient être chargés les fils 11 de façon à éviter le foisonnement desdits fils qui pourrait sinon engendrer leur dégradation dans le four 70.

Le four 70 fonctionne par convection à air chaud. Il pourrait tout aussi bien s'agir de four à infrarouge.

Le chauffage de la nappe 12 par son passage dans le four 70 s'effectue à une température telle qu'à sa sortie du four la nappe ait une température suffisante pour atteindre la température de fusion du thermoplastique des fils 11 pour que ce dernier, fondu, se colle et se noie dans les filaments de verre de l'ensemble de la nappe 12.

Le four 70 peut être constitué de deux fours successifs : un premier four, en amont du second par rapport au sens de défilement. Le premier four a pour fonction de chauffer la nappe 12 comme décrit ci-dessus, le second four a pour fonction de conditionner la nappe à une température inférieure adaptée à l'introduction de la nappe dans le dispositif de conformation 100.

Après le four 70 est situé un dispositif tournant d'imprégnation 80 qui aplatit la nappe 12 de façon à chasser l'air contenu entre les fils, à répartir de manière homogène sur la largeur de la nappe le thermoplastique fondu, et à garantir la totale imprégnation des filaments de verre par le thermoplastique.

Le dispositif d'imprégnation 80 est constitué de trois organes disposés en triangle entre lesquels circule la nappe 12. Dans un premier mode de réalisation, les organes peuvent être constitués par des barreaux fixes dont l'écartement est ajusté pour régler la pression nécessaire à l'imprégnation. Les barreaux peuvent être chauffants pour maintenir le thermoplastique à une température de malléabilité sans coller à la surface des barreaux. A cet effet, la surface peut être en un matériau adapté ou bien être spécifiquement traitée.

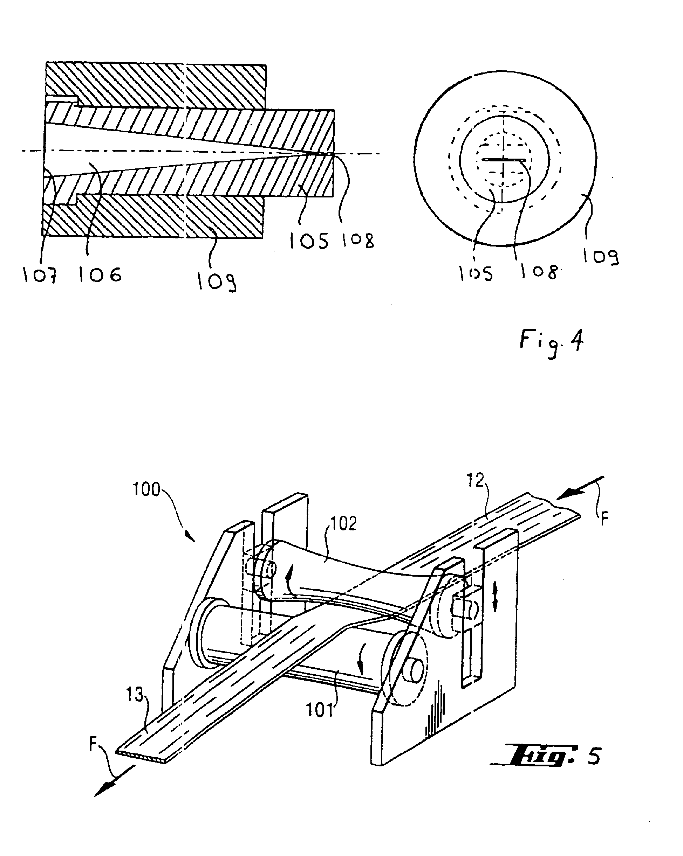

Dans une variante, visible à la figure 3, le dispositif 80 est constitué de trois cylindres 81 parallèles entre eux et disposés en triangle de façon à présenter deux cylindres inférieurs et un cylindre supérieur. Les cylindres sont chauffants et atteignent une température suffisante pour maintenir le thermoplastique de la nappe dans un état malléable.

Les cylindres 81 sont rotatifs, ceux inférieurs tournant dans le sens positif de direction de défilement F de la nappe 12, tandis que celui supérieur tourne dans le sens opposé, les vitesses de rotation étant identiques et correspondant à celle de défilement de la nappe.

Le cylindre supérieur est réglable en hauteur pour établir une pression suffisante sur la nappe 12 de façon à assurer l'imprégnation du verre par le thermoplastique.

Les cylindres 81 étant en contact avec la nappe présentent rapidement sur leur surface le dépôt d'un film de matière thermoplastique. Avantageusement, lesdits cylindres comportent chacun une lame 82 faisant office de racle par rapport à leur surface et dont le rôle est tout à la fois d'éviter la formation d'enroulements parasites des filaments de verre et d'aider à la répartition homogène du thermoplastique fondu sur la longueur du ruban. Ainsi en cas de surplus d'épaisseur du film sur chaque cylindre, ce surplus permet de compléter l'enrobage des filaments de verre qui seraient éventuellement insuffisamment revêtus.

Les lames 82 sont réglables en inclinaison de manière à optimiser leur efficacité.

En variante, dans un même but de régulation de la répartition de la matière thermoplastique, au lieu d'utiliser les lames 82, les trois cylindres sont entraînés à une vitesse de rotation légèrement inférieure à celle de défilement de la nappe. Cette solution nécessite non seulement la motorisation des cylindres 82 mais aussi la mise en place d'un mécanisme de contrôle de vitesse.

A noter qu'il serait possible d'imaginer un four dans lequel serait logé le dispositif d'imprégnation 80 apte à résister à la température du four.

A la sortie du four est placé un premier dispositif de conformation 100 qui peut comprendre une filière de section calibrée appropriée pour conformer la nappe à la forme et aux dimensions souhaitées pour le ruban. Suivant différents modes de réalisation, l'orifice de la filière peut être sensiblement rectangulaire pour former un ruban plat, qui pourra éventuellement être déformé par la suite, ou de forme plus complexe pour former un ruban conformé suivant un profil particulier. L'orifice de la filière est avantageusement réalisé dans une pièce amovible qui se fixe sur un support fixe, ce qui permet un nettoyage et un remplacement aisés.

La filière est avantageusement chauffante pour maintenir les surfaces de conformation à une température voisine du point de fusion ou de la température de malléabilité du thermoplastique de la nappe. On utilise par exemple un chauffage par une ou plusieurs ceintures chauffantes à résistance électrique enserrant une ou plusieurs zones de la filière.

La figure 4 représente un premier dispositif de conformation 100 constitué d'une filière. Cette dernière comprend un corps sensiblement cylindrique 105 comprenant une ouverture large 107 en amont, par laquelle est introduite la nappe 12, une cavité 106 dont la largeur est constante et dont la hauteur décroît jusqu'à l'épaisseur désirée du ruban à former, et en aval, une sortie 108 par laquelle sort le ruban 13 formé. Une partie du corps sensiblement cylindrique 105 est disposé dans un corps de chauffe 109. Le chauffage peut notamment être assuré par des résistances électriques sous la forme de ceintures chauffantes disposées autour du corps de chauffe 109 et possiblement autour de la partie du corps sensiblement cylindrique 105 qui dépasse du corps de chauffe 109.

En variante, le dispositif de conformation 100 peut comprendre des galets de formes diverses entre lesquels circule la nappe de fils. Bien qu'il soit également possible de fabriquer un ruban conformé selon cette variante, elle est plus particulièrement destinée à la réalisation d'un ruban plat.

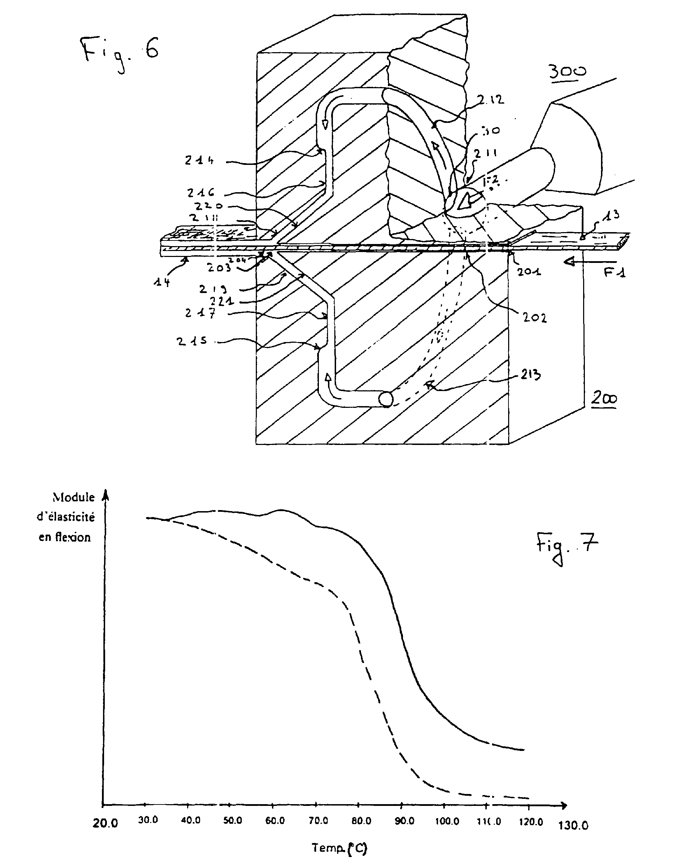

Ainsi, un dispositif selon cette variante comprend, tel qu'illustré à la figure 5, un galet inférieur cylindrique 101 et un galet supérieur hyperboloïde 102 légèrement décalé en amont par rapport à la verticale du galet inférieur, tous deux tournants et chauffants pour maintenir à la température de malléabilité le thermoplastique de la nappe 12.

Le dispositif 100 a pour but de transformer la nappe 12 en un ruban 13 d'épaisseur constante constitué par le rapprochement en contigu des fils 11 pour réaliser une continuité transversale dudit ruban. Ainsi, le dispositif 100 concentre la nappe autour de l'axe central de la ligne pour diminuer sa largeur qui avait été augmentée lors de son passage dans le dispositif d'imprégnation 80, et la recentre par rapport à l'axe central de la ligne de fabrication pour guider le ruban convenablement en aval vers la calandre 110.

Le rassemblement et le guidage vers le centre est obtenu par la forme hyperboloïde du galet supérieur 102 qui, par son réglage en hauteur, permet par ailleurs d'appliquer une légère pression sur la surface supérieure de la nappe pour la concentrer.

La rotation en sens opposé des galets 101 et 102 évite d'une part, l'essorage de la matière thermoplastique, et d'autre part, son accumulation qui pourrait nuire à la régularité de sa répartition et par conséquent, à l'épaisseur du ruban.

Après le premier dispositif de conformation 100 est situé un second dispositif de conformation 200, visible à la figure 6. Le dispositif de conformation 200 est une filière alimentée d'une part par au moins un ruban 13 obtenu comme décrit ci-dessus, et d'autre part par un moyen 300, notamment une extrudeuse connue de l'homme du métier, qui apporte sous pression au moins une seconde matière organique thermoplastique fondue 30.

La figure 6 représente une coupe partiellement éclatée du dispositif de conformation 200, représenté en perspective. La coupe est effectuée perpendiculairement au plan du ruban 13, et au sens du défilement du ruban 13. La partie éclatée permet de visualiser les moyens 300 pour apporter la matière thermoplastique 30 et le parcours de cette dernière dans le dispositif de conformation 200.

Le dispositif de conformation 200 est constitué d'une entrée 201 pour un ruban 13, introduit dans le sens de la flèche F1, d'une entrée 211 pour de la seconde matière thermoplastique 30 introduite dans le sens de la flèche F2.

Le ruban 13 défile dans une cavité 202 pour aboutir dans une cavité 203.

La matière thermoplastique 30 parcourt des canaux 212, 213 situés à l'écart de la cavité 202. Ces canaux sont destinés à alimenter en matière thermoplastique 30 la cavité 203 par plusieurs côtés.

Les canaux 212, 213 comportent des rétrécissements 214, 215 pour déboucher dans des canaux 216, 217 à section inférieure à celle des canaux 212, 213. On peut ainsi créer des surpressions dans la matière thermoplastique fondue 30.

Les canaux 216, 217 débouchent dans la cavité 203.

Cette dernière cavité 203 est bordée de parois 218, 219 constitués de plans inclinés qui aboutissent à une sortie 204. On obtient alors un système convergent qui permet d'amener la matière thermoplastique 30 au contact du ruban 13. La surpression P appliquée permet de créer un contact intime entre la matière thermoplastique 30 et le ruban 13, tout en évitant un refoulement vers l'amont de la matière thermoplastique.

La cavité 203 peut être dessinée de manière à ce que de la matière thermoplastique 30 converge de manière homogène dans toutes les directions autour du ruban 13. Pour obtenir cette fonction on peut notamment utiliser un guide tronconique comportant des parois inclinées 219, 220 situé autour de la cavité 202.

On peut ainsi diriger le flux de matière thermoplastique 30 afin de positionner un ruban 13 dans une configuration désirée et obtenir ainsi un profilé 14 où le renfort est placé dans une géométrie définie en fonction des applications choisies.

Il faut noter que la position du dispositif d'extrusion 300 représentée ici en tête d'équerre n'est nullement limitative : en effet il peut être situé en toute position autour de l'axe de parcours du ruban 13.

En outre, on envisage également un dispositif de mise en oeuvre du procédé où l'extrudeuse est disposée suivant la direction de défilement du profilé. En particulier, on envisage que l'extrudeuse 300 délivre de la matière thermoplastique 30 dans l'axe de défilement du profilé 14, 10 et où au moins un ruban 13 est apporté dans au moins une direction quelconque et converge dans l'axe de défilement du profilé 14, 10 après avoir pénétré dans le dispositif de conformation 200.

Il est ainsi possible d'obtenir des profilés 10 renforcés par plusieurs rubans 13.

Un dispositif 110, est situé en aval du dispositif 200 qui guide le profilé 14, dont le refroidissement commence dès la sortie de la filière au contact de l'air ambiant, vers des moyens de refroidissement spécifiques dans le but de fixer les caractéristiques dimensionnelles du profilé et de lui donner son aspect définitif afin de disposer d'un profilé fini 10. Le dispositif 110 refroidit le profilé 14 pour figer la seconde matière thermoplastique en lui conférant un aspect surfacique lisse.

Ce dispositif 110 peut être une calandre constituée de cylindres, éventuellement refroidis par une circulation interne d'eau. De façon plus avantageuse, ce sera une filière froide de même profil et de même dimension que la filière chaude 100, sa température pouvant être comprise entre la température ambiante et 200 °C par exemple.

Le refroidissement final du ruban est réalisé au moyen du bac de refroidissement 120, notamment à eau, situé après la calandre 110 et dans lequel passe le profilé 14 lors de son défilement. Le bac 120 peut comprendre des moyens de projection du liquide de refroidissement sur le profilé 10.

Au cours de tous ses refroidissements, toute la masse de la seconde matière thermoplastique fige, ainsi que le premier thermoplastique pour obtenir la solidarisation des fils entre eux et la liaison des renforts fibreux à la matrice de seconde matière thermoplastique.

Postérieurement au bac de refroidissement est implanté un banc de tirage à chenilles 130 qui constitue de manière connue un moyen d'entraînement des fils et du ruban, exerçant un effort de traction tout au long de la ligne. Il impose la vitesse de dévidage et de défilement de la nappe puis du ruban.

Enfin, le dispositif 1 de fabrication peut comprendre en terminaison de ligne une scie destinée à découper le profilé de manière à faciliter son stockage.

La mise en oeuvre du procédé peut s'effectuer de la manière suivante.

La mise en route du procédé s'effectue d'abord en tirant et en amenant manuellement chaque fil 11 des bobines 2 jusqu'au banc de tirage 130 où chaque fil est alors maintenu pincé, l'ensemble des fils passant au travers des divers dispositifs décrits plus haut. Il s'agit dans cet exemple d'application de 35 rovings de fil composite comêlé verre-polyester de marque *TWINTEX®* dont le titre global 860 tex comprend 65% de verre en poids. Le polyester, notamment du polytéréphtalate d'éthylène, constitue alors la première matière thermoplastique.

Le four 70 ainsi que les éléments chauffants du dispositif 1 sont montés en température pour atteindre une température nettement supérieure à la température de fusion du polyester, soit 254°C dans le cas du polytéréphtalate d'éthylène. Les autres moyens fonctionnent aux températures suivantes :

- organes du dispositif imprégnation 80 : 290°C ;
- galets du dispositif de conformation 100 selon le mode de réalisation illustré sur la figure 4 : 270°C à 300°C ;
- dispositif de conformation 100 selon le mode de réalisation avec une filière : 310°C ;
- second dispositif de conformation 200 : 190 à 200°C dans la zone où s'effectue le contact intime entre le ruban 13 et la seconde matière thermoplastique 30.

Le banc de tirage 130 est mis en fonctionnement, le dévidage des bobines 2 commence.

Les fils 11 passent au travers des oeillets 31, puis à cheval des barreaux dans le dispositif 40, et sont rassemblés au travers des dents du peigne 50 pour former en sortie la nappe 12 de fils parallèles.

La nappe 12 rencontre alors le dispositif 60 qui élimine toute électricité statique.

Elle rentre ensuite dans le four 70 de façon que la première matière thermoplastique atteigne sa température de fusion. En sortie, elle passe entre les cylindres chauffants du dispositif 80 qui permettent de la laminer en chassant l'air, et de répartir uniformément la première matière thermoplastique qui enrobe ainsi les filaments de verre. Remarquons que la quantité de matière thermoplastique n'est pas à doser puisque celle-ci est directement intégrée à la matière première du ruban par son comêlage avec les filaments de verre. La température de la nappe atteint après le passage dans ce dispositif 80 une température de 260 à 270°C.

Puis la nappe 12 défile entre les cylindres ou à travers la filière du premier dispositif de conformation 100 pour la transformer en un ruban 13, conformé en resserrant les fils les uns contre les autres et en les disposant de manière contiguë. Après conformation, le ruban présente une température de 270 à 280°C.

Puis un ruban 13 pénètre dans le second dispositif de conformation 200 après un parcours qui le refroidit quelque peu, notamment jusqu'à 210°C environ.

Ledit dispositif 200 est alimenté simultanément par une seconde matière thermoplastique 30.

Le contact entre le ruban 13 et la seconde matière thermoplastique 30 s'effectue à environ 190°C à 200°C.

Le profilé 14 passe ensuite entre les cylindres de la calandre froide 110 qui fixe sa forme définitive en figeant la surface de la seconde matière thermoplastique et en solidarisant les fils entre eux. On obtient le profilé 10 de l'invention d'épaisseur constante et d'aspect lisse. Le profilé présente une température de 100°C en sortie de calandre.

Pour faciliter et accélérer le refroidissement de l'ensemble du profilé 10, celui-ci passe dans du liquide de refroidissement retenu par le bac 120 et devient en sortie, sa température étant de 30°C, un produit solide et suffisamment rigide pour être découpé, pour des facilités de stockage, de transport et d'utilisation.

On obtient alors des profilés composites présentant une liaison intime entre le ruban de renfort et la matrice constituée par la seconde matière thermoplastique. Quand la pression P appliquée est suffisante le profilé obtenu est dépourvu de porosité.

Pour illustrer l'intérêt des produits obtenus par le procédé décrit ci-dessus des essais de fabrication de profilés ont été entrepris et des échantillons de ces profilés ont fait l'objet d'essais mécaniques.

Les profilés fabriqués pour ces essais sont pleins.

Les échantillons testés ont une section rectangulaire de 30 mm de large et de 7,5 mm d'épaisseur.

Le ruban de renfort mesure environ 18 mm de largeur et 1 mm d'épaisseur. Une face large du ruban est situé à 1 mm d'une première face large de l'échantillon. Le ruban est donc recouvert de seconde matière thermoplastique par une épaisseur d'environ 5,5 mm d'un côté et par 1 mm de l'autre côté.

Le ruban est centré sur la largeur du profilé, donc entouré sur sa largeur d'environ 11 mm par la seconde matière thermoplastique.

La seconde matière thermoplastique est un polychlorure de vinyle (PVC).

Des essais mécaniques de résistance en flexion 3 points sur échantillon de section 30 x 7,5 comme indiqué précédemment, avec distance entre appuis égale à 20 fois l'épaisseur de l'échantillon, réalisés à température ambiante, selon la norme ISO 14125, ont permis de déterminer le module élastique du profilé :

on obtient : $E_{profilé} = 3600 \pm 200$ MPa.

En comparaison, un profilé de PVC seul de mêmes dimensions a un module élastique de : $E_{PVC} = 2650$ MPa.

L'effet du ruban de renfort conduit à une augmentation du module élastique de l'ordre de 40%.

Il est possible d'optimiser l'augmentation de module du profilé décrit en déplaçant l'axe du ruban de renfort par rapport à l'axe de la fibre neutre du profilé. Une seconde série d'essais effectués sur des échantillons de profilé de mêmes dimensions dans lesquels le ruban de renfort a été éloigné de l'axe de la fibre neutre du profilé a ainsi permis d'obtenir les résultats suivants :

$E_{profilé} = 4800 \pm 100$ MPa, soit une augmentation du module élastique d'environ 80%.

Une troisième série d'échantillons a été réalisée avec un profilé d'épaisseur double du précédent soit 15 mm, où deux rubans de renfort de 1 mm d'épaisseur et de 18 mm de largeur ont été insérés.

Les faces larges externes des deux rubans sont situés à 1 mm du bord large du profilé. On a donc environ 11 mm de seconde matière plastique entre les bords internes des deux rubans.

On obtient alors pour ce profilé un module élastique :

$$E_{profilé\ à\ deux\ rubans} = 7350 \pm 200 \text{ MPa}.$$

L'augmentation du module élastique est presque d'un facteur 3 par rapport au PVC seul.

D'autres essais mécaniques de résistance en flexion 3 points ont été réalisés avec une quatrième série d'échantillons en faisant varier la température de l'échantillon.

Les échantillons testés ont une section rectangulaire de 13 mm de large et 3,7 mm d'épaisseur, le ruban de renfort d'une épaisseur d'environ 1 mm étant toujours situé à environ 1 mm d'une première face de l'échantillon. La distance entre appuis est alors de 48 mm.

Les essais mécaniques menés dans une plage de températures de 30 à 120°C ont permis de déterminer le module élastique du profilé à chacune des températures d'essai. La variation du module est représentée sur la figure 7 par la courbe en trait plein pour un profilé renforcé selon l'invention et par un trait interrompu pour un profilé non renforcé. La figure 7 présente les variations relatives de module, c'est pourquoi les deux courbes partent du même point d'origine à 30°C.

Compte tenu de la géométrie relativement peu favorable du profilé avec un renfort situé relativement près de l'axe de la fibre neutre du profilé, la différence de module à température ambiante est toutefois relativement moins marquée que dans les séries d'essais précédentes.

Pour l'échantillon de PVC non renforcé, on observe une diminution très rapide du module élastique lorsque la température augmente avec une transition vitreuse pour une température de l'ordre de 100°C. A titre indicatif, le module est de l'ordre de 1000 MPa à 80°C et de l'ordre de quelques MPa à 120°C.

Pour l'échantillon de PVC renforcé, on observe une certaine stabilité du module élastique lorsque la température augmente, du moins jusqu'à 70-80°C, avec une chute moins rapide pour les températures supérieures, avec en outre une transition vitreuse pour une température de l'ordre de 90°C. A titre indicatif, le module est supérieur à 2000 MPa à 80°C et de l'ordre de 500 MPa à 120°C.

On démontre ainsi qu'on obtient un excellent transfert de charge entre la matrice thermoplastique et le renfort à température ambiante comme à température élevée.

Sans vouloir être lié par cette explication, on présume que c'est l'excellente cohésion apportée par les différentes étapes du procédé, et notamment la constitution d'un ruban à partir de fibres de verre et de fibres organiques, qui confère ces propriétés remarquables.

Les modes de réalisation décrits précédemment ne sont nullement limitatifs, et l'on peut envisager notamment de fabriquer un profilé dans lequel le ruban de renfort n'est pas sensiblement plat mais adopte une configuration angulaire ou courbe.

On peut ainsi envisager la fabrication de tubes de plastique, par exemple en polypropylène, avec un renfort tubulaire interne, médian ou externe, intimement mêlé à la matière plastique du tube. Le renfort tubulaire est constitué d'un ruban fait à partir de fils continus dans lesquels la matière thermoplastique est avantageusement du polypropylène dans le cas de l'exemple, le ruban étant enroulé selon son axe de défilement préalablement ou concomitamment à son passage dans la filière d'extrusion. La matière plastique du tube peut avantageusement être choisie, traitée ou combinée à une autre matière pour conférer un aspect ou un toucher particulier, notamment avec un revêtement en élastomère.

Le procédé selon l'invention peut ainsi être appliqué à la réalisation de baguettes, rails, tubes ou tuyaux, de matériaux de couverture tels que les clins (bardeaux de façade), de piquets.

**Revendications**

1. Procédé de fabrication d'un profilé composite (10) à base de matière organique thermoplastique renforcée par des fibres de renforcement comprenant les étapes consistant à mettre une multiplicité de fils continus de renforcement (11) en présence d'un matière organique thermoplastique et à conformer la matière composite, qui comprend au moins les étapes suivantes :

   - on rassemble de manière parallèle des fils continus (11) à base de fibres de verre continues et d'une première matière thermoplastique, ces fils étant co-mêlés entre-eux,
   - on impose une mise en tension des fils continus (11) par un dispositif de mise en tension (40),
   - on forme en chauffant au moins un ruban (13) consolidé dans lequel les fibres de renforcement sont imprégnées de la première matière thermoplastique,
   - on introduit au moins un ruban (13) dans une filière (200) calibrée à la section du profilé et l'on introduit simultanément au moins une deuxième matière organique thermoplastique (30) fondue dans ladite filière (200) au contact du ou des rubans, de manière à obtenir un profilé (10) constitué d'au moins une deuxième matière organique thermoplastique renforcée par au moins un ruban.

2. Procédé selon la revendication 1, **caractérisé en ce que l**'on forme le ruban (13) à partir de fils continus (11) comprenant des fils de verre et des fibres organiques de ladite première matière thermoplastique.

3. Procédé selon l'une quelconque des revendications précédentes, **caractérisé en ce qu**'il comprend les étapes suivantes :

   - on entraîne et on rassemble de manière parallèle des fils (11) à base d'une première matière thermoplastique et de fibres de renforcement, sous la forme d'au moins une nappe (12) ;

- on fait pénétrer au moins une nappe (12) dans une zone où elle est chauffée à une température atteignant au moins celle de fusion de la première matière thermoplastique sans atteindre la température de ramollissement des fibres de renforcement ;

- on fait passer au moins une nappe (12) dans un dispositif d'imprégnation (80), tout en maintenant sa température à une température de malléabilité de la première matière thermoplastique, pour répartir de manière homogène la première matière thermoplastique fondue et imprégner les fibres de renforcement par celle-ci.

4. Procédé selon l'une quelconque des revendications précédentes, **caractérisé en ce que** l'on introduit au moins une nappe (12) dans un premier dispositif de conformation (100), tout en maintenant sa température à une température de malléabilité de la première matière thermoplastique, de manière à obtenir au moins un ruban (13) constitué par le rapprochement en contigu des fils (11) formant une continuité transversale.

5. Procédé selon l'une quelconque des revendications précédentes, **caractérisé en ce qu'**il consiste à dévider des bobines d'un fil continu de filaments de renforcement et de la première matière thermoplastique, et lors du rassemblement des fils sous forme de nappe, à réguler la tension des fils.

6. Procédé selon l'une quelconque des revendications précédentes, **caractérisé en ce que** les fils (11) sont débarrassés de toute électricité statique avant le passage de la nappe (12) dans la zone de chauffage.

7. Procédé selon l'une quelconque des revendications précédentes **caractérisé en ce que** la seconde matière plastique (30) est introduite dans la filière (200) après avoir été conditionnée par un dispositif d'extrusion (300).

8. Procédé selon l'une quelconque des revendications précédentes, **caractérisé en ce que** l'on refroidit le profilé (14) pour fixer ses caractéristiques dimensionnelles et son aspect pour délivrer ledit profilé final (10).

9. Procédé selon l'une quelconque des revendications précédentes **caractérisé en ce que** le profilé (10) est découpé en fin de ligne de fabrication pour son stockage.

10. Procédé selon l'une quelconque des revendications précédentes **caractérisé en ce que** la première matière thermoplastique est un polyester et la deuxième matière thermoplastique est le polychlorure de vinyle.

11. Dispositif de mise en oeuvre du procédé selon l'une quelconque des revendications 1 à 10, qui comprend :

- des moyens de mise en tension des fils (11) sont prévus en amont des moyens de rassemblement (50),

- des moyens (130,50) pour rassembler de manière parallèle des fils continus à base de fibres de verre continues et d'une première matière thermoplastique, ces fils étant ainsi co-mêlés et des moyens (70,80), notamment de chauffage (70), pour former au moins un ruban consolidé (13) dans lequel les fibres de verre sont imprégnées de la première matière thermoplastique, et

- une filière (200) calibrée à la section du profilé (10) et des moyens ( ,300) pour introduire simultanément au moins un ruban (14) et au moins une deuxième matière organique thermoplastique (30) fondue dans ladite filière (200) au contact du ou des rubans, de manière à obtenir un profilé constitué d'au moins une deuxième matière organique thermoplastique renforcée par au moins un ruban.

12. Dispositif selon la revendication 11, **caractérisé en ce qu'**il comprend :

- des moyens (130) pour entraîner et des moyens (50) pour rassembler sous forme d'au moins une nappe (12) les fils continus (11) constitués de filaments de renforcement et d'une première matière thermoplastique ;

- des moyens (70) pour chauffer au moins une nappe (12) à une température atteignant au moins celle de fusion de la première matière thermoplastique mais pas celle de ramollissement des filaments de renforcement;

- un dispositif d'imprégnation (80) d'au moins une nappe chauffée de manière à répartir de manière homogène la première matière thermoplastique fondue et permettre l'imprégnation des filaments de renforcement par celle-ci.

13. Dispositif selon la revendication 11 ou 12, **caractérisé en ce que** les moyens de chauffage (70) sont des fours.

14. Dispositif selon l'une quelconque des revendications 11 à 13, **caractérisé en ce que** les moyens de rassemblement (50) consistent en un peigne dont les dents (51) permettent un alignement parallèle des fils (11) selon des espaces réguliers.

**15.** Dispositif selon l'une des revendications 12 à 14, **caractérisé en ce que** le dispositif d'imprégnation (80) comporte trois cylindres (81) chauffants et tournants qui sont disposés en triangle et entre lesquels défile la nappe (12), la hauteur de séparation des cylindres étant adaptée pour établir une pression appropriée sur la surface de la nappe.

**16.** Dispositif selon la revendication 15, **caractérisé en ce que** chaque cylindre (81) comporte une lame (82) pour racler la matière thermoplastique fondue déposée sur le cylindre après passage de la nappe.

**17.** Dispositif selon l'une quelconque des revendications 11 à 16, **caractérisé en ce qu'il** comprend un premier dispositif de conformation (100) d'au moins une nappe (12) de manière à la transformer en au moins un ruban (13).

**18.** Dispositif selon l'une quelconque des revendications 11 à 17, **caractérisé en ce que** le premier dispositif de conformation (100) comporte une filière de préférence chauffante.

**19.** Dispositif selon l'une quelconque des revendications 11 à 18 **caractérisé en ce que** la filière (200) calibrée à la section du profilé (10) comprend des moyens (214,215) pour apporter la seconde matière thermoplastique fondue au contact du ruban (13) en appliquant une surpression (P).

**20.** Dispositif selon l'une quelconque des revendications 11 à 19 **caractérisé en ce que** une extrudeuse (300) apporte la seconde matière thermoplastique fondue (30) dans la filière (200) calibrée à la section du profilé (10).

**21.** Dispositif selon l'une quelconque des revendications 11 à 20 **caractérisé en ce qu'**il comprend un dispositif de refroidissement comprenant au moins un moyen choisi parmi une calandre de refroidissement (110), une filière froide et des moyens de pulvérisation de liquide.

**22.** Dispositif selon l'une quelconque des revendications 11 à 21, **caractérisé en ce qu'**un dispositif anti-statique est prévu en amont des moyens de chauffage (70).

**Patentansprüche**

**1.** Verfahren zur Herstellung eines Verbundprofils (10) auf der Basis eines thermoplastischen organischen Materials, das von Verstärkungsfasern verstärkt wird, welches die Stufen umfasst, die darin bestehen, eine Vielzahl endloser Verstärkungsfäden (11) mit einem thermoplastischen organischen Material in Berührung zu bringen und das Verbundmaterial zu formen, und welches wenigstens die Stufen:

- paralleles Vereinigen der endlosen Fäden (11) auf der Basis von endlosen Fasern aus Glas und aus einem ersten thermoplastischen Material, wobei diese Fäden miteinander vermischt werden,
- den endlosen Fäden (11) durch eine Spanneinrichtung (40) eine Spannung mitteilen,
- Formen, indem mindestens ein verfestigtes Band (13), in welchem die Verstärkungsfasern mit dem ersten thermoplastischen Material imprägniert sind, erwärmt wird, und
- Einführen wenigstens eines Bandes (13) in eine auf den Querschnitt des Profils eingestellte Düse (200) und zeitgleiches Einführen wenigstens eines geschmolzenen zweiten thermoplastischen organischen Materials (30) in die Düse (200) in Berührung mit dem/den Band/Bändern derart, dass ein Profil (10) erhalten wird, das aus mindestens einem zweiten thermoplastischen organischen Material, das von mindestens einem Band verstärkt wird, besteht,

umfasst.

**2.** Verfahren nach Anspruch 1, **dadurch gekennzeichnet, dass** das Band (13) aus endlosen Fäden (11) gebildet wird, die Glasfäden und organischen Fasern aus dem ersten thermoplastischen Material umfassen.

**3.** Verfahren nach einem der vorhergehenden Ansprüche, **dadurch gekennzeichnet, dass** es die Stufen:

- Bewegen und paralleles Vereinigen der Fäden (11) auf der Basis von einem ersten thermoplastischen Material und Verstärkungsfasern zur Form von mindestens einer Bahn (12),
- Schicken von mindestens einer Bahn (12) in einen Bereich, in welchem sie auf eine Temperatur erwärmt wird, die mindestens die Schmelztemperatur des ersten thermoplastischen Materials erreicht, ohne dabei die Erweichungstemperatur der Verstärkungsfasern zu erreichen, und
- Schicken von mindestens einer Bahn (12) durch eine Imprägniereinrichtung (80), wobei ihre Temperatur auf einer Formgebungstemperatur des ersten thermoplastischen Materials gehalten wird, um das geschmolzene erste thermoplastische Material homogen zu verteilen und die Verstärkungsfasern mit ihm zu imprägnieren,

umfasst.

**4.** Verfahren nach einem der vorhergehenden Ansprüche, **dadurch gekennzeichnet, dass** mindestens eine Bahn (12) in eine erste Formgebungseinrichtung (100) geschickt wird, wobei ihre Temperatur auf der Formgebungstemperatur des ersten thermoplastischen Materials derart gehalten wird, dass mindestens ein Band (13) erhalten wird, das aus der Aneinanderanordnung der Fäden (11) besteht, die in Querrichtung eine Kontinuität bilden.

**5.** Verfahren nach einem der vorhergehenden Ansprüche, **dadurch gekennzeichnet, dass** es darin besteht, von Spulen einen endlosen Faden aus verstärkenden Filamenten und solchen aus dem ersten thermoplastischen Material abzuwickeln und während der Vereinigung der Fäden zur Form einer Bahn die Spannung der Fäden zu regulieren.

**6.** Verfahren nach einem der vorhergehenden Ansprüche, **dadurch gekennzeichnet, dass** die Fäden (11) vor dem Einführen der Bahn (12) in die Erwärmungszone von jeder statischen Elektrizität befreit werden.

**7.** Verfahren nach einem der vorhergehenden Ansprüche, **dadurch gekennzeichnet, dass** der zweite Kunststoff (30) der Düse (200) zugeführt wird, nachdem er in einer Extrudiereinrichtung (300) verarbeitet worden ist.

**8.** Verfahren nach einem der vorhergehenden Ansprüche, **dadurch gekennzeichnet, dass** das Profil (14) abgekühlt wird, um seine Formeigenschaften und sein Aussehen zu fixieren und so das fertige Profil (10) liefern zu können.

**9.** Verfahren nach einem der vorhergehenden Ansprüche, **dadurch gekennzeichnet, dass** das Profil (10) am Ende der Produktionslinie zugeschnitten wird, um es zu lagern.

**10.** Verfahren nach einem der vorhergehenden Ansprüche, **dadurch gekennzeichnet, dass** das erste thermoplastische Material ein Polyester und das zweite thermoplastische Material Polyvinylchlorid ist.

**11.** Vorrichtung zur Durchführung des Verfahrens nach einem der Ansprüche 1 bis 10, **dadurch gekennzeichnet, dass** sie:

- Mittel, die vor den Vereinigungsmitteln (50) vorgesehen sind, um den Fäden (11) eine Spannung mitzuteilen,
- Mittel (130, 50), um endlose Fäden auf der Basis von endlosen Filamenten aus Glas und aus einem ersten thermoplastischen Material parallel zu vereinigen, wobei die Fäden so miteinander vermischt werden, und Mittel (70, 80), insbesondere Erwärmungsmittel (70), um mindestens ein verfestigtes Band (13) zu bilden, in welchem die Glasfilamente mit dem ersten thermoplastischen Material imprägniert sind, und _
- eine Düse (200), die auf den Querschnitt des Profils (10) eingestellt ist, und Mittel (300), um zeitgleich mindestens ein Band (14) und mindestens ein geschmolzenes zweites thermoplastisches organisches Material (30) in die Düse (200) in Berührung mit dem/den Band/Bändern derart einzuführen, dass ein Profil erhalten wird, das aus mindestens einem zweiten thermoplastischen organischen Material, das von mindestens einem Band verstärkt wird, besteht,

umfasst.

**12.** Vorrichtung nach Anspruch 11, **dadurch gekennzeichnet, dass** sie:

- Mittel (130) zum Bewegen und Mittel (50) zum Vereinigen der endlosen Fäden (11), die aus verstärkenden Filamenten und solchen aus einem ersten thermoplastischen Material bestehen, zur Form von mindestens einer Bahn (12),
- Mittel (70), um mindestens eine Bahn (12) auf eine Temperatur zu erwärmen, die mindestens die Schmelztemperatur des ersten thermoplastischen Materials, aber nicht die Erweichungstemperatur der Verstärkungsfilamente erreicht, und
- eine Einrichtung (80) zum Imprägnieren von mindestens einer Bahn, die derart erwärmt worden ist, dass das geschmolzene erste thermoplastische Material homogen verteilt wird und die Imprägnierung der Verstärkungsfilamente mit ihm erlaubt, umfasst.

**13.** Vorrichtung nach Anspruch 11 oder 12, **dadurch gekennzeichnet, dass** die Erwärmungsmittel (70) Öfen sind.

**14.** Vorrichtung nach einem der Ansprüche 11 bis 13, **dadurch gekennzeichnet, dass** die Vereinigungsmittel (50) aus einem Kamm bestehen, dessen Zinken (51) eine parallele Ausrichtung der Fäden (11) in regelmäßigen Abständen erlauben.

**15.** Vorrichtung nach einem der Ansprüche 12 bis 14, **dadurch gekennzeichnet, dass** die Imprägniereinrichtung (80) drei Zylinder (81) umfasst, die beheizt werden, sich drehen und in einem Dreieck angeordnet sind und zwischen welchen die Bahn (12) durchläuft, wobei die Höhe, welche die Zylinder voneinander trennt, eingestellt wird, um auf die Oberfläche der Bahn einen geeigneten Druck auszuüben.

**16.** Vorrichtung nach Anspruch 15, **dadurch gekennzeichnet, dass** jeder Zylinder (81) eine Klinge (82) umfasst, um das nach dem Durchgang der Bahn auf dem Zylinder abgelagerte geschmolzene thermoplastische Material abzustreifen.

**17.** Vorrichtung nach einem der Ansprüche 11 bis 16, **dadurch gekennzeichnet, dass** sie eine erste Einrichtung (100) zur Bildung mindestens einer Bahn (12) derart umfasst, dass diese in mindestens ein Band (13) umgewandelt wird.

**18.** Vorrichtung nach einem der Ansprüche 11 bis 17, **dadurch gekennzeichnet, dass** die erste Formgebungseinrichtung (100) eine vorzugsweise beheizte Düse umfasst.

**19.** Vorrichtung nach einem der Ansprüche 11 bis 18, **dadurch gekennzeichnet, dass** die auf den Querschnitt des Profils (10) eingestellte Düse (200) Mittel (214, 215) zum In-Berührung-Bringen des geschmolzenen zweiten thermoplastischen Materials mit dem Band (13), indem ein Überdruck (P) ausgeübt wird, umfasst.

**20.** Vorrichtung nach einem der Ansprüche 11 bis 19, **dadurch gekennzeichnet, dass** das geschmolzene zweite thermoplastische Material (30) von einem Extruder (300) in die auf den Querschnitt des Profils (10) eingestellte Düse (200) gebracht wird.

**21.** Vorrichtung nach einem der Ansprüche 11 bis 20, **dadurch gekennzeichnet, dass** sie eine Kühleinrichtung enthält, die mindestens ein Mittel umfasst, das aus einem Kühlkalander (110), einer kalten Düse und Mitteln zum Aufsprühen einer Flüssigkeit ausgewählt ist.

**22.** Vorrichtung nach einem der Ansprüche 11 bis 21, **dadurch gekennzeichnet, dass** vor den Erwärmungsmitteln (70) eine Einrichtung zur Ableitung der statischen Elektrizität vorgesehen ist.

**Claims**

**1.** Process for manufacturing a composite profile (10) based on a thermoplastic organic material reinforced by reinforcing fibres, comprising the steps consisting in making a multiplicity of continuous reinforcing yarns (11) come into contact with a thermoplastic organic material and in shaping the composite, which comprises at least the following steps:

- continuous yarns (11) based on continuous glass fibres and on a first thermoplastic are brought together so as to be parallel, these yarns being co-mingled together;

- continuous yarns (11) are tensioned by a tensioning device (40);
- at least one consolidated tape (13) is formed by heating them, in which tape the reinforcing fibres are impregnated with the first thermoplastic;
- at least one tape (13) is introduced into a die (200) sized to the cross section of the profile and at least one second molten thermoplastic organic material (30) is simultaneously introduced into the said die (200) in contact with the tape or tapes, so as to obtain a profile (10) consisting of at least one second thermoplastic organic material reinforced by at least one tape.

**2.** Process according to Claim 1, **characterized in that** the tape (13) is formed from continuous yarns (11) comprising glass yarns and organic fibres of the said first thermoplastic.

**3.** Process according to any one of the preceding claims, **characterized in that** it comprises the following steps:

- yarns (11) based on a first thermoplastic and on reinforcing fibres are entrained and brought together in a parallel manner in the form of at least one sheet (12);
- at least one sheet (12) is made to enter a zone in which it is heated to a temperature reaching at least the melting point of the first thermoplastic without reaching the softening temperature of the reinforcing fibres;
- at least one sheet (12) is made to pass through an impregnation device (80), while maintaining its temperature at a temperature at which the first thermoplastic is malleable, in order to distribute the first molten thermoplastic uniformly and to impregnate the reinforcing fibres therewith.

**4.** Process according to any one of the preceding claims, **characterized in that** at least one sheet (12) is introduced into a first shaping device (100), while maintaining its temperature at a temperature at which the first thermoplastic is malleable, so as to obtain at least one tape (13) formed by bringing the yarns (11) together so as to be touching, thereby creating transverse continuity.

**5.** Process according to any one of the preceding claims, **characterized in that** it consists in unreeling, from wound packages, a continuous yarn of reinforcing filaments and filaments of the first thermoplastic and, while the yarns are being brought together in the form of a sheet, in regulating the tension in the yarns.

**6.** Process according to any one of the preceding claims, **characterized in that** the yarns (11) are stripped of any static electricity before the sheet (12) passes into the heating zone.

**7.** Process according to any one of the preceding claims, **characterized in that** the second plastic (30) is introduced into the die (200) after having been conditioned by an extruder (300).

**8.** Process according to any one of the preceding claims, **characterized in that** the profile (14) is cooled in order to fix its dimensional characteristics and its appearance in order to deliver the said final profile (10).

**9.** Process according to any one of the preceding claims, **characterized in that** the profile (10) is cut up at the end of the manufacturing line in order to be stored.

**10.** Process according to any one of the preceding claims, **characterized in that** the first thermoplastic is a polyester and the second thermoplastic is polyvinyl chloride.

**11.** Apparatus for implementing the process according to any one of Claims 1 to 10, which comprises:

- means for tensioning yarns (11) are provided upstream of the means (50) for bringing the yarns together,
- means (130, 50) for bringing together in a parallel manner continuous yarns based on continuous glass fibres and on a first thermoplastic, these yarns thus being co-mingled, and means (70, 80), especially heating means (70), for forming at least one consolidated tape (13) in which the glass fibres are impregnated with the first thermoplastic; and
- a die (200) sized to the cross section of the profile (10) and means (300) for simultaneously introducing at least one tape (14) and at least one second molten thermoplastic organic material (30) into the said die (200) in contact with the tape or tapes, so as to obtain a profile consisting of at least one second thermoplastic organic material reinforced with at least one tape.

**12.** Apparatus according to Claim 11, **characterized in that** it comprises:

- means (130) for entraining the continuous yarns (11) consisting of reinforcing filaments and filaments of a first thermoplastic and means (50) for bringing the said continuous yarns together into the form of at least one sheet (12);
- means (70) for heating at least one sheet (12) to a temperature reaching at least that of the melting point of the first thermoplastic, but not the softening temperature of the reinforcing filaments;
- a device (80) for impregnating at least one heated sheet so as to distribute the first molten thermoplastic uniformly and allow the reinforcing filaments to be impregnated therewith.

**13.** Apparatus according to Claim 11 or 12, **characterized in that** the heating means (70) are ovens.

**14.** Apparatus according to any one of Claims 11 to 13, **characterized in that** the means (50) for bringing the yarns together consist of a comb, the tines (51) of which produce a uniformly-spaced parallel alignment of the yarns (11).

**15.** Apparatus according to any one of Claims 12 to 14, **characterized in that** the impregnation device (80) comprises three heated rotating rolls (81) which are arranged in a triangle and between which the sheet (12) runs, the roll separation height being adapted in order to apply suitable pressure to the surface of the sheet.

**16.** Apparatus according to Claim 15, **characterized in that** each roll (81) has a blade (82) for scraping off the molten thermoplastic deposited on the roll after the sheet has passed.

**17.** Apparatus according to any one of Claims 11 to 16, **characterized in that** it comprises a first device (100) for shaping at least one sheet (12) so as to convert it into at least one tape (13).

**18.** Apparatus according to any one of Claims 11 to 17, **characterized in that** the first shaping device (100) comprises a die, which is preferably heated.

**19.** Apparatus according to any one of Claims 11 to 18, **characterized in that** the die (200) sized to the cross section of the profile (10) includes means (214, 215) for bringing the second molten thermoplastic into contact with the tape (13) by applying an overpressure (P).

**20.** Apparatus according to any one of Claims 11 to 19, **characterized in that** an extruder (300) delivers the second molten thermoplastic (30) into the die (200) sized to the cross section of the profile (10).

**21.** Apparatus according to any one of Claims 11 to 20, **characterized in that** it includes a cooling device comprising at least one means chosen from a cooling calender (110), a cold die and liquid-spraying means.

**22.** Apparatus according to any one of Claims 11 to 21, **characterized in that** an anti-static device is provided upstream of the heating means (70).

**Fig. 1**

Fig. 2

Fig. 3

107 106    109    105 108

105 108 109

Fig. 4

100    12    F

102

13    F

101    Fig. 5

Fig. 6

Fig. 7

Module d'élasticité en flexion

20.0 30.0 40.0 50.0 60.0 70.0 80.0 90.0 100.0 110.0 120.0 130.0

Temp.(°C)